# EUROPEAN PATENT APPLICATION

(11) **EP 1 741 957 A1**
(43) Date of publication of application: **10.01.2007**
(21) Application number: 06010967.5
(22) Date of filing: 29.05.2006
(51) Int. Cl.: F16H 37/02

(54) **Motion transmission system for motor vehicle engines**

(30) Priority: 08.07.2005 IT TO20050094 U
(71) Applicant: FIAT AUTO S.p.A., 10135 Torino (IT)
(72) Inventor: Cappellini, Antonio, 10135 Torino (IT); Maiorana, Giovanni, 10135 Torino (IT)
(74) Representative: Di Francesco, Gianni

(57) **Abstract**

Motion transmission system for a high-performance diesel-cycle engine, which at the exit of the crankshaft (3) of the engine (1), before the clutch-gearbox assembly, is provided of a revolution reducer assembly (4).

## Description

The present invention relates to a motion transmission system for motor vehicles, and in particular to a motion transmission system for diesel-cycle and high-powered motor vehicle engines.

The main problem with the high-powered diesel-cycle engines is that this kind of engine develops very high deflecting torques which, especially in the vehicles used in the races which require limited total weights and therefore a dimensioning of the gearbox and the clutch always at the possibilities limit, often make the gearboxes and the clutches under-dimensioned for the torque to be transmitted, and therefore unreliable.

The aim of the present invention is to provide a transmission system for diesel-cycle and high-powered engines which overcomes the aforesaid drawbacks.

Said aim is attained by a transmission system which shows the features of the first claim.

Further features and advantages will be apparent from the following description, exclusively provided by way of example and not binding for the invention. Such description refers to the enclosed figures, wherein:

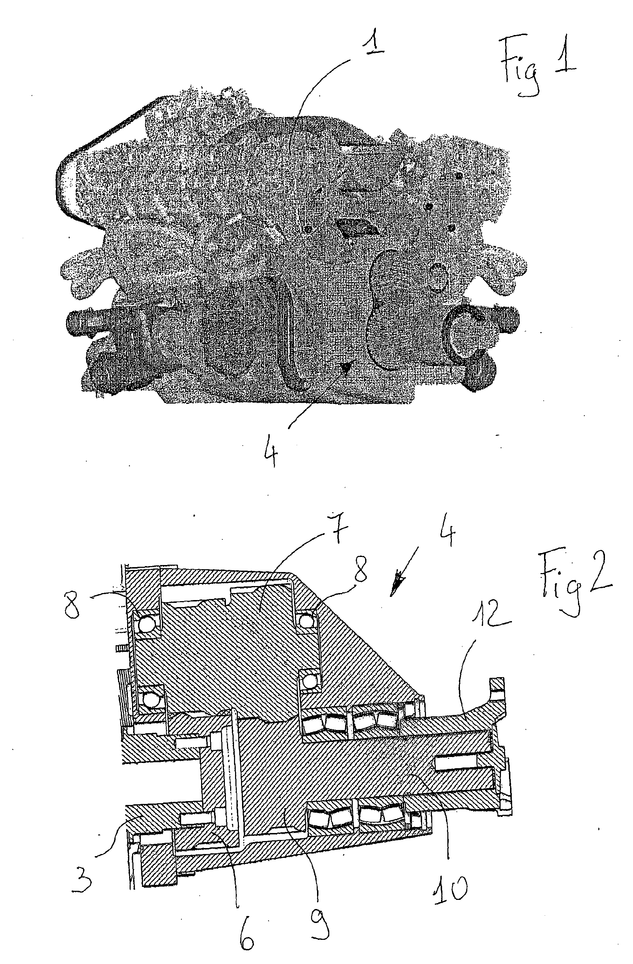

- figure 1 is a perspective and diagrammatic view of an engine equipped with an execution example of the transmission of the invention, and
- figure 2 is a sectional view of the transmission system of the invention of figure 1.

Referring to the figures, by 1 a diesel-cycle, high-powdered internal-combustion engine is shown, suitable for being installed on a motor vehicle, in particular a car for participating in track races, such as the 24 hrs of Le Mans or rallies-long-distance races, such as the Paris-Dakar.

For the purpose of reducing the deflecting torque exiting from the drive shaft 3, a revolution reducer 4 with fixed ratio is interposed, in this case a reduction gear, between the engine 1 and the transmission assembly (clutch-gearbox). In figure 2, a section of the revolution reducer 4 is visible, composed by a gear 6 drive fitted on the driving shaft and which engages with a double idle gear 7 supported by roller bearings 8. The idle gear engages with a reduction gearing the gear 9 of an output shaft 10 supported by bearings 11 and having a flange 12 for its connection to the clutch disc (not shown). It is understood that the fixed ratio reducer assembly could also be epicyclic, without leaving for this reason the ambit of the present invention.

In this simple and economic way, by multiplying the rotating speed of the output shaft with a fixed ratio reduction gear, the torque transmission to the clutch and consequently to the gearbox is reduced, so that they can remain in a standard conformation without the need of expensive reinforcements and sometimes unfeasible owing to the lack of space or too high costs and weights.

## Claims

1. Motion transmission system for a high-performance diesel-cycle engine, **characterized in that** at the exit of the crankshaft (3) of the engine (1), before the clutch-gearbox assembly, a fixed ratio revolution reducer assembly (4) is installed.

2. System according to claim 1, **characterized in that** the revolution reducer assembly (4) is a gear reducer.

3. System according to claim 1, **characterized in that** the revolution reducer assembly (4) is epicycloidal.

4. Transmission system according to claim 2, **characterized in that** the revolution reducer assembly consists of a gear (6) drive fitted on the drive shaft (3) and engaging with a double idle gear (7) which engages, in turn, with a reduction gearing, with the gear (9) of an output shaft (10) equipped with a flange (12) for its connection to the clutch disc.
